# EUROPÄISCHE PATENTANMELDUNG

(11) **EP 2 141 793 A1**
(43) Veröffentlichungstag der Anmeldung: **06.01.2010**
(21) Anmeldenummer: 08159340.2
(22) Anmeldetag: 30.06.2008
(51) Int. Cl.: H02M 7/48, H02M 7/49

(54) **Umrichterschaltung**

(71) Anmelder: ABB Research LTD, 8050 Zürich (CH)
(72) Erfinder: Coccia, Antonio, CH-5400, Baden (CH); Canales, Francisco, CH-5405, Baden-Dättwil (CH); Steimer, Peter, CH-5420, Ehrendingen (CH)
(74) Vertreter: ABB Patent Attorneys

(57) **Zusammenfassung**

Es wird eine Umrichterschaltung mit einem mit einem Wechselspannungsnetz verbindbaren Gleichrichter (1) angegeben, welcher Gleichrichter (1) gleichspannungsseitig mit einem Energiespeicherkreis (2) verbunden ist. Die Umrichterschaltung umfasst ferner einen Wechselrichter (3), welcher Wechselrichter (3) gleichspannungsseitig mit dem Energiespeicherkreis (2) verbunden ist. Um einen einfachen, wartungsarmen, robusten und zudem platzsparenden Aufbau zu erreichen ist ein Transformator (4) mit seiner Primärwicklung (5) mit einem ersten und zweiten Wechselspannungsausgang (A, B) des Wechselrichters (3) verbunden, wobei der Transformator (4) für jede Wechselspannungsausgangsphase (u, v, w) der Umrichterschaltung eine Sekundärwicklung (6) aufweist und mit jeder Sekundärwicklung (6) eine der jeweiligen Sekundärwicklung (6) zugeordnete Teilumrichtereinheit (7) verbunden ist und ein erster Wechselspannungsausgang (X) einer jeden Teilumrichtereinheit (7) die jeweilige Wechselspannungsausgangsphase (u, v, w) der Umrichterschaltung bildet. Darüber hinaus ist zur Erzielung geringer Schaltverluste in die Verbindung der Primärwicklung (5) mit den Wechselspannungsausgängen (A, B) des Wechselrichters (3) eine LC-Resonanzschaltung (8) seriell eingeschaltet, wobei die LC-Resonanzschaltung (8) eine Resonanzkapazität (C) und Resonanzinduktivität (L) aufweist, oder es ist alternativ in die Verbindung der Primärwicklung (5) mit den Wechselspannungsausgängen (A, B) des Wechselrichters (3) eine CLL-Resonanzschaltung (12) eingeschaltet, welche CLL-Resonanzschaltung (12) eine Resonanzkapazität (C), eine erste und eine zweite Resonanzinduktivität (L1, L2) aufweist.

## Beschreibung

### Technisches Gebiet

Die Erfindung bezieht sich auf das Gebiet der Leistungselektronik. Sie geht aus von einer Umrichterschaltung nach dem Oberbegriff des unabhängigen Anspruchs.

### Stand der Technik

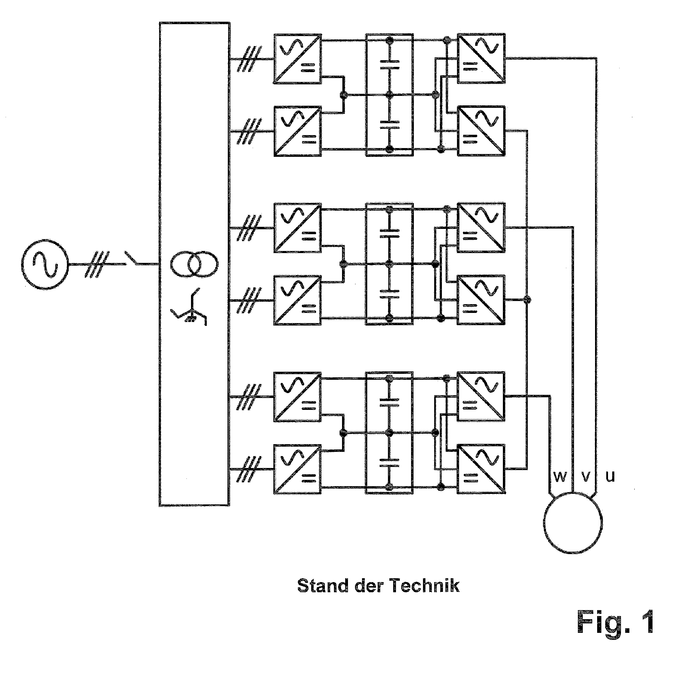

Heute werden in vielen Anwendungen vor allem in der Industrie und in Traktionsanwendungen, beispielsweise im Bahnbereich, Umrichterschaltungen eingesetzt. Eine solche Umrichterschaltung nach dem Stand der Technik ist in Fig. 1 beispielhaft dargestellt. Darin umfasst die Umrichterschaltung einen mit einem dreiphasigen Wechselspannungsnetz primärseitig verbindbaren Transformator, welcher in Zick-Zack-Schaltung ausgebildet ist, um harmonische Schwingungen zu kompensieren. Mit der Sekundärseite des Transformators sind für jede Ausgangsphase u, v, w der Umrichterschaltung jeweils zwei Gleichrichter vorgesehen, welche beide mit ihrer Gleichspannungsseite mit einem Energiespeicherkreis, gebildet durch zwei seriell miteinander verbundene kapazitive Energiespeicher, verbunden sind. Zudem sind gemäss Fig. 1 jeweils zwei Wechselrichter mit ihren Gleichspannungsseiten mit jedem Energiespeicherkreis verbunden, wobei die Wechselspannungsseite jeweils eines dieser Wechselrichter dann eine Ausgangsphase u, v, w der Umrichterschaltung bildet. Problematisch bei einer Umrichterschaltung der eingangs beschriebenen Art, insbesondere nach Fig. 1, ist der sehr komplizierte und damit teuere Aufbau des Transformators und die insgesamt hohe Anzahl an Gleichrichtern und an Wechselrichtern. Insgesamt wird dadurch die Umrichterschaltung aufwendig, wartungsintensiv, störanfällig, teuer und benötigt sehr viel Platz, welcher aber beispielsweise für Traktionsanwendungen nur in sehr begrenztem Masse zur Verfügung steht. Ferner kann es bei der vorstehend beschrieben Umrichterschaltung zu Schaltverlusten in den Leistungshalbleiterschaltern der Gleichrichter und Wechselrichter kommen, welche diese, insbesondere thermisch, stark belasten. Dadurch altern die Leistungshalbleiterschalter entsprechend schnell und die Ausfallraten der Leistungshalbleiterschalter steigen mit der Betriebsdauer der Umrichterschaltung an. Eine hohe Verfügbarkeit der Umrichterschaltung, wie sie beispielsweise bei Traktionsanwendungen unabdingbar ist, ist dann nicht mehr gegeben.

### Darstellung der Erfindung

Aufgabe der Erfindung ist es deshalb, eine Umrichterschaltung anzugeben, welche einen einfachen, wartungsarmen, robusten und zudem platzsparenden Aufbau sowie geringe Schaltverluste aufweist. Diese Aufgabe wird durch die Merkmale des Anspruchs 1 gelöst. In den abhängigen Ansprüchen sind vorteilhafte Weiterbildungen der Erfindung angegeben.

Die erfindungsgemässe Umrichterschaltung umfasst einen mit einem Wechselspannungsnetz verbindbaren Gleichrichter, welcher Gleichrichter gleichspannungsseitig mit einem Energiespeicherkreis verbunden ist. Die Umrichterschaltung umfasst ferner einen Wechselrichter, welcher Wechselrichter gleichspannungsseitig mit dem Energiespeicherkreis verbunden ist. Erfindungsgemäss ist ein Transformator mit seiner Primärwicklung mit einem ersten und zweiten Wechselspannungsausgang des Wechselrichters verbunden, wobei der Transformator für jede Wechselspannungsausgangsphase der Umrichterschaltung eine Sekundärwicklung aufweist und mit jeder Sekundärwicklung eine der jeweiligen Sekundärwicklung zugeordnete Teilumrichtereinheit verbunden ist. Weiterhin bildet ein erster Wechselspannungsausgang einer jeden Teilumrichtereinheit die jeweilige Wechselspannungsausgangsphase der Umrichterschaltung. Der Transformator wird mit Vorteil mit einer im wesentlichen über der Netzfrequenz des Wechselspannungsnetzes liegenden Betriebsfrequenz betrieben (vorzugsweise im Mittelfrequenz-Bereich), wodurch für den Transformator und damit für die gesamte Umrichterschaltung ein einfacher, wartungsarmer, robuster und zudem platzsparender Aufbau erreicht werden kann. Darüber hinaus ist in die Verbindung der Primärwicklung mit den Wechselspannungsausgängen des Wechselrichters eine LC-Resonanzschaltung seriell eingeschaltet, wobei die LC-Resonanzschaltung eine Resonanzkapazität und Resonanzinduktivität aufweist. Alternativ zu der LC-Resonanzschaltung ist in die Verbindung der Primärwicklung mit den Wechselspannungsausgängen des Wechselrichters eine CLL-Resonanzschaltung eingeschaltet, welche CLL-Resonanzschaltung eine Resonanzkapazität, eine erste und eine zweite Resonanzinduktivität aufweist. Mittels der LC-Resonanzschaltung bzw. mittels der CLL-Resonanzschaltung, die durch den Wechselrichter derart angesteuert wird, dass sie mit ihrer Resonanzfrequenz schwingt, ist es neben dem stromlosen Ein- und Ausschalten der vorzugsweise verwendeten ansteuerbaren bidirektionalen Leistungshalbleiterschalter des Wechselrichters zudem möglich, die ansteuerbaren bidirektionalen Leistungshalbleiterschalter des Wechselrichters auch spannungslos einund auszuschalten. Dadurch können die Schaltverluste der ansteuerbaren bidirektionalen Leistungshalbleiterschalter reduziert werden und eine verlustarme Übertragung durch die gesamte Umrichterschaltung ist vorteilhaft möglich. Durch die Verringerung der Schaltverluste verlängert sich die Lebensdauer der ansteuerbaren bidirektionalen Leistungshalbleiterschalter entsprechend und die Ausfallraten der Umrichterschaltung können gering gehalten werden, so dass sich vorteilhaft eine hohe Verfügbarkeit der Umrichterschaltung ergibt. Darüber hinaus lassen sich durch die LC-Resonanzschaltung bzw. durch die CLL-Resonanzschaltung Harmonische auf der Wechselspannungsnetzseite reduzieren.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine Umrichterschaltung nach dem Stand der Technik,
- Fig. 2: eine erste Ausführungsform einer erfindungsgemässen Umrichterschaltung,
- Fig. 3: eine zweite Ausführungsform der erfindungsgemässen Umrichterschaltung,
- Fig. 4: eine dritte Ausführungsform der erfindungsgemässen Umrichterschaltung,
- Fig. 5: eine vierte Ausführungsform der erfindungsgemässen Umrichterschaltung und
- Fig. 6: eine fünfte Ausführungsform der erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

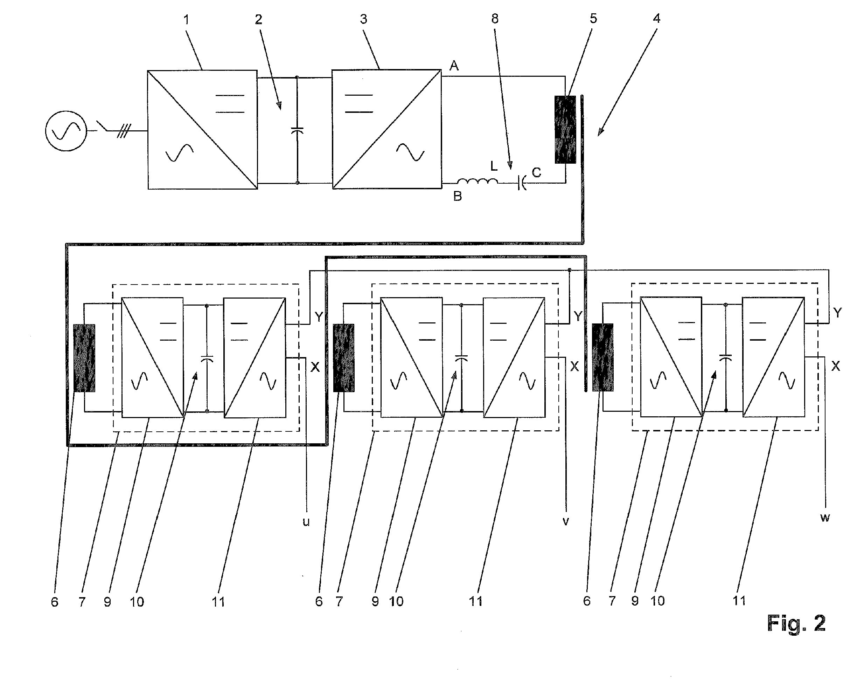

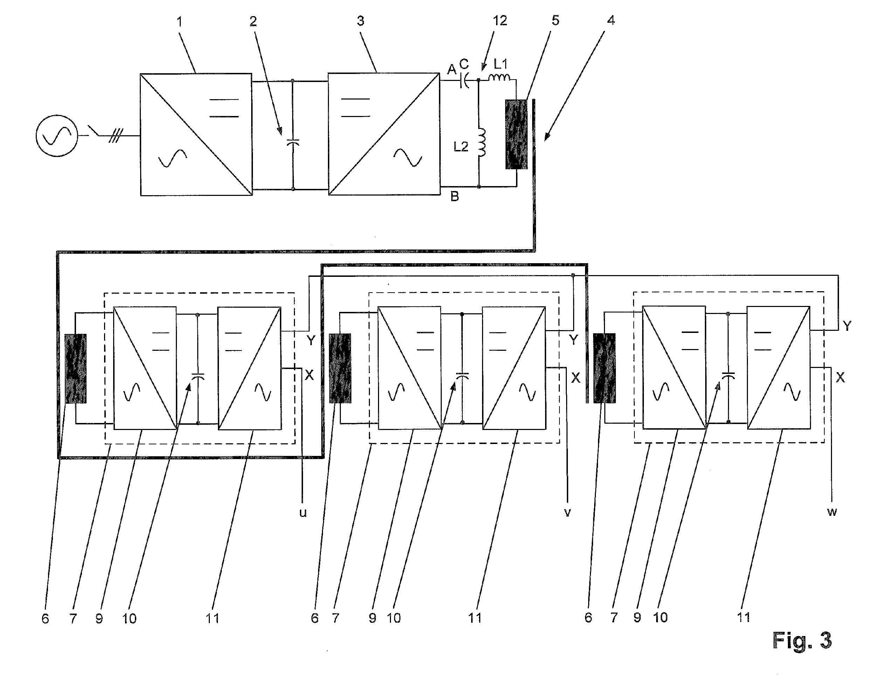

In Fig. 1 ist die bereits eingangs beschriebene Umrichterschaltung nach dem Stand der Technik dargestellt. Fig. 2 zeigt eine erste Ausführungsform einer erfindungsgemässen Umrichterschaltung. Darin umfasst die Umrichterschaltung einen mit einem Wechselspannungsnetz verbindbaren Gleichrichter 1, welcher Gleichrichter 1 gleichspannungsseitig mit einem Energiespeicherkreis 2 verbunden ist. Die Umrichterschaltung umfasst desweiteren einen Wechselrichter 3, welcher Wechselrichter 3 gleichspannungsseitig mit dem Energiespeicherkreis 2 verbunden ist. Erfindungsgemäss ist nun ein Transformator 4 mit seiner Primärwicklung 5 mit einem ersten und zweiten Wechselspannungsausgang A, B des Wechselrichters 3 verbunden, wobei der Transformator 4 für jede Wechselspannungsausgangsphase u, v, w der Umrichterschaltung eine Sekundärwicklung 6 aufweist und mit jeder Sekundärwicklung 6 eine der jeweiligen Sekundärwicklung 6 zugeordnete Teilumrichtereinheit 7 verbunden ist. Weiterhin bildet ein erster Wechselspannungsausgang X einer jeden Teilumrichtereinheit 7 die jeweilige Wechselspannungsausgangsphase u, v, w der Umrichterschaltung. Der Transformator 4 wird vorteilhaft mit einer im wesentlichen über der Netzfrequenz des Wechselspannungsnetzes liegenden Betriebsfrequenz betrieben (vorzugsweise im Mittelfrequenz-Bereich), d.h. der Transformator 4 arbeitet beispielsweise als Mittelfrequenztransformator, wodurch für den Transformator 4 und damit für die gesamte Umrichterschaltung ein einfacher, wartungsarmer, robuster und zudem platzsparender Aufbau erreicht werden kann. Darüber hinaus ist in die Verbindung der Primärwicklung 5 mit den Wechselspannungsausgängen A, B des Wechselrichters 3 eine LC-Resonanzschaltung 8 seriell eingeschaltet, wobei die LC-Resonanzschaltung eine Resonanzkapazität C und Resonanzinduktivität L aufweist. Seriell bedeutet in diesem Zusammenhang, dass die eine Resonanzkapazität C und Resonanzinduktivität L und die Primärwicklung in beliebig denkbarer Weise seriell zueinander geschaltet sind und nicht auf die Ausführungsform nach Fig. 2 beschränkt sind. Alternativ zu der LC-Resonanzschaltung 8 ist in einer zweiten Ausführungsform der erfindungsgemässen Umrichterschaltung nach Fig. 3 in die Verbindung der Primärwicklung 5 mit den Wechselspannungsausgängen A, B des Wechselrichters 3 eine CLL-Resonanzschaltung 12 eingeschaltet, welche CLL-Resonanzschaltung 12 eine Resonanzkapazität C, eine erste und eine zweite Resonanzinduktivität L1, L2 aufweist. Mittels der LC-Resonanzschaltung 8 bzw. mittels der CLL-Resonanzschaltung 12, die durch den Wechselrichter 3 derart angesteuert wird, dass sie mit ihrer Resonanzfrequenz schwingt, ist es neben dem stromlosen Ein- und Ausschalten der vorzugsweise verwendeten ansteuerbaren bidirektionalen Leistungshalbleiterschalter des Wechselrichters 3 zudem möglich, die ansteuerbaren bidirektionalen Leistungshalbleiterschalter des Wechselrichters 3 auch spannungslos ein- und auszuschalten. Dadurch können die Schaltverluste der ansteuerbaren bidirektionalen Leistungshalbleiterschalter reduziert werden und eine verlustarme Übertragung durch die gesamte Umrichterschaltung ist vorteilhaft möglich. Durch die Verringerung der Schaltverluste verlängert sich die Lebensdauer der ansteuerbaren bidirektionalen Leistungshalbleiterschalter entsprechend und die Ausfallraten der Umrichterschaltung können gering gehalten werden, so dass sich vorteilhaft eine hohe Verfügbarkeit der Umrichterschaltung ergibt. Darüber hinaus lassen sich durch die LC-Resonanzschaltung bzw. durch die CLL-Resonanzschaltung Harmonische auf der Wechselspannungsnetzseite reduzieren.

Gemäss Fig. 3 ist die Resonanzkapazität C seriell mit der ersten Resonanzinduktivität L1 verbunden und die Serienschaltung der Resonanzkapazität C ist mit der ersten Resonanzinduktivität L1 in die Verbindung der Primärwicklung 5 mit dem ersten Wechselspannungsausgang A des Wechselrichters 3 eingeschaltet und die zweite Resonanzinduktivität L2 mit dem Verbindungspunkt der Resonanzkapazität C ist mit der ersten Resonanzinduktivität L1 verbunden, wobei die zweite Resonanzinduktivität L2 mit der Verbindung der Primärwicklung 5 mit dem zweiten Wechselspannungsausgang B des Wechselrichters 3 verbunden ist.

Vorzugsweise ist der Gleichrichter 1 als Zweiquadrantenumrichter (Zweiquadrantensteller) oder als Vierquadrantenumrichter (Vierquadrantensteller) ausgebildet, so dass dieser zum einen den Gleichrichterbetrieb im Falle einer Speisung vom Wechselspannungsnetz und zum anderen den Wechselrichterbetrieb im Falle einer Speisung zurück in das Wechselspannungsnetz ermöglicht. Zur Reduzierung des Ansteueraufwandes der Umrichterschaltung, ist es aber auch denkbar, den Gleichrichter 1 als Diodengleichrichter auszuführen.

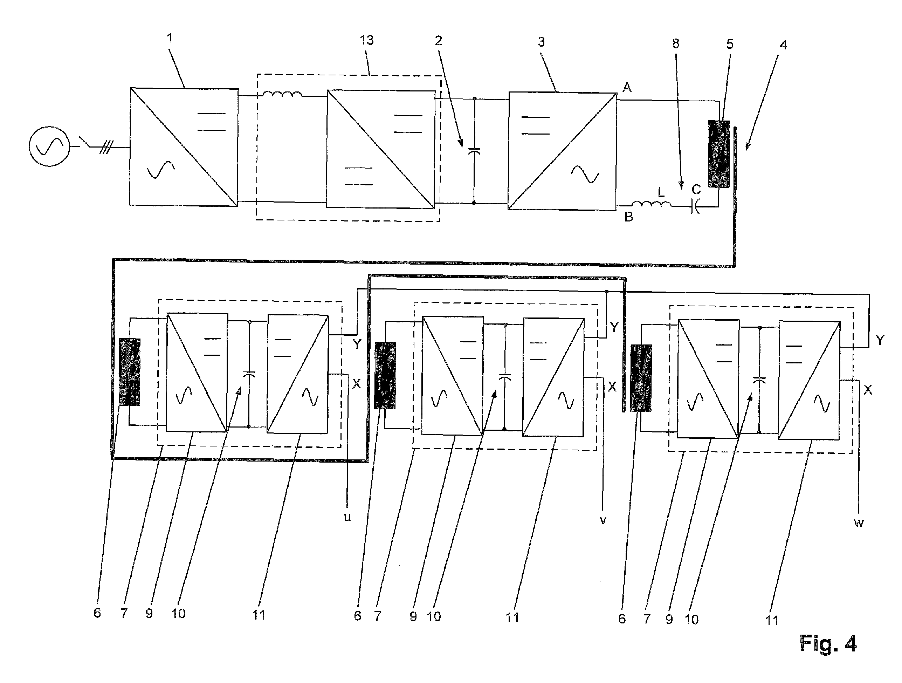

In der in Fig. 4 gezeigten vierten Ausführungsform der erfindungsgemässen Umrichterschaltung ist eine Leistungsfaktorregelungseinheit 13 zwischen dem Gleichrichter 1 und dem Energiespeicherkreis 2 eingeschaltet, die der Einstellung des Leistungsfaktors dient und die durch einen Gleichspanungssteller oder einen Gleichstromsteller und einen elektrischen Energiespeicher, wie beispielsweise eine Induktivität oder eine Kapazität, gebildet ist. Mit Vorteil wird die Leistungsfaktorregelungseinheit 13 im Zusammenhang mit dem als Diodengleichrichter ausgebildeten Gleichrichter 1 eingesetzt.

Allgemein weist jede Teilumrichtereinheit 7 der erfindungsgemässen Umrichterschaltung einen Gleichrichter 9 auf, welcher Gleichrichter 9 gleichspannungsseitig mit einem Energiespeicherkreis 10 der Teilumrichtereinheit 7 verbunden ist. Zudem weist jede Teilumrichtereinheit 7 einen Wechselrichter 11 auf, welcher Wechselrichter 11 gleichspannungsseitig mit dem Energiespeicherkreis 10 der Teilumrichtereinheit 7 verbunden ist und die Wechselspannungsausgänge des Wechselrichters 11 den ersten und einen zweiten Wechselspannungsausgang X, Y der zugehörigen Teilumrichtereinheit 7 bilden. Vorzugsweise sind die zweiten Wechselspannungsausgänge Y der Teilumrichtereinheiten miteinander verbunden.

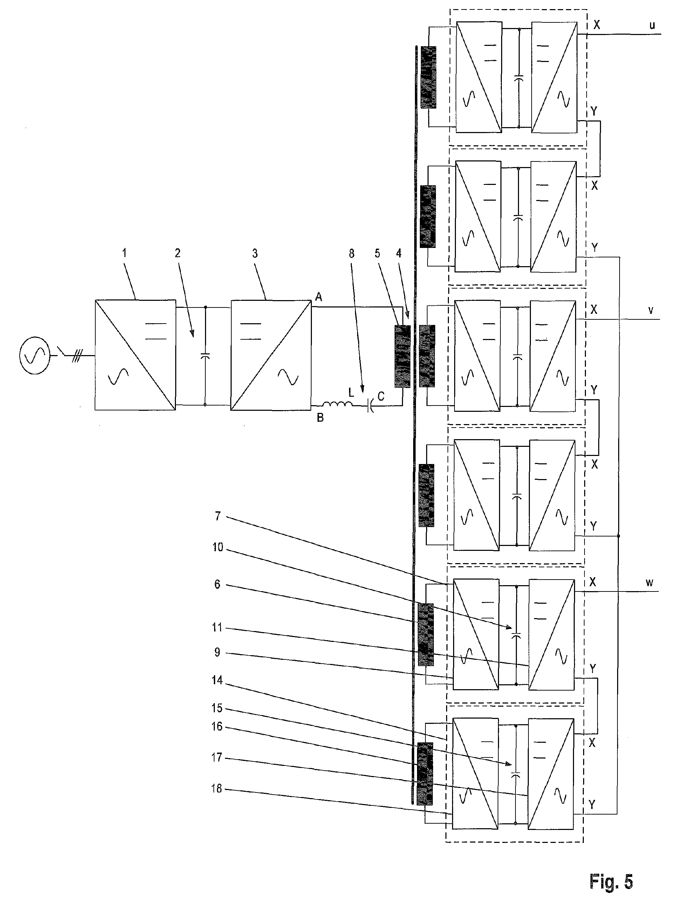

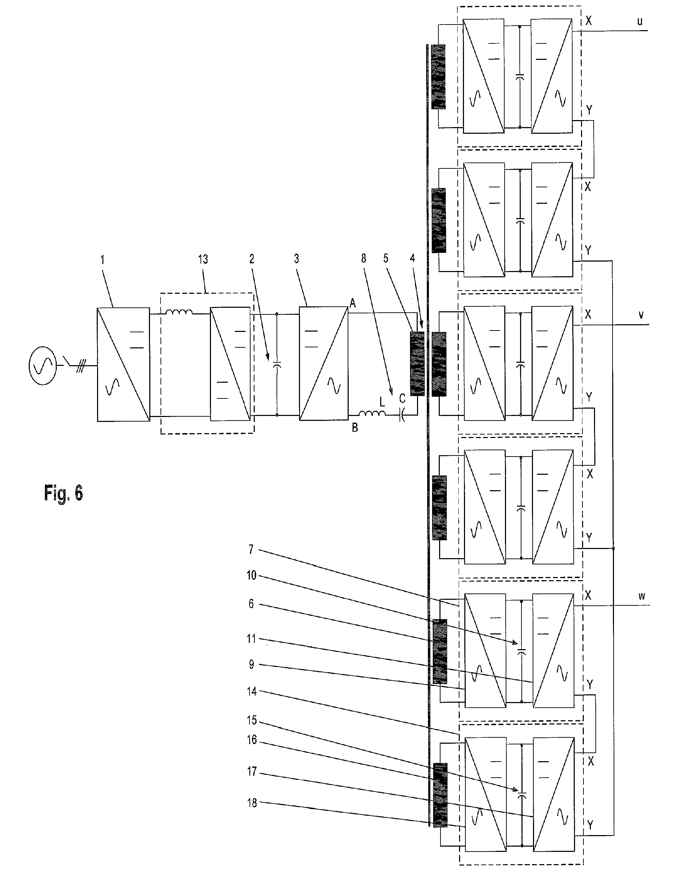

In den Ausführungsformen nach Fig. 5 und Fig. 6 der erfindungsgemässen Umrichterschaltung weist der Transformator 4 für jede Wechselspannungsausgangsphase u, v, w der Umrichterschaltung n weitere Sekundärwicklungen 16 auf und mit jeder der n weiteren Sekundärwicklung 16 ist eine der jeweiligen n-weiteren Sekundärwicklung 16 zugeordnete Teilumrichtereinheit 14 verbunden, wobei n ≥ 1 ist.

Jede Teilumrichtereinheit 14 einer jeden n weiteren Sekundärwicklung 16 weist gemäss Fig. 5 und Fig. 6 einen Gleichrichter 18 auf, welcher Gleichrichter 18 gleichspannungsseitig mit einem Energiespeicherkreis 15 der Teilumrichtereinheit 16 verbunden ist. Ferner weist jede Teilumrichtereinheit 14 der n weiteren Sekundärwicklung 16 einen Wechselrichter 17 auf, welcher Wechselrichter 17 gleichspannungsseitig mit dem Energiespeicherkreis 15 der Teilumrichtereinheit 14 verbunden ist und die Wechselspannungsausgänge des Wechselrichters 17 einen ersten und zweiten Wechselspannungsausgang X, Y der zugehörigen Teilumrichtereinheit 14 bilden. Damit ist jede Teilumrichtereinheit 14 einer jeden n weiteren Sekundärwicklung 16 entsprechend der vorstehend bereits detailliert beschriebenen Teilumrichtereinheit 7 für jede Wechselspannungsausgangsphase u, v, w ausgebildet.

Im Fall n = 1, welcher beispielhaft in Fig. 5 und Fig. 6 gezeigt ist, ist für jede Wechselspannungsausgangsphase u, v, w der Umrichterschaltung der erste Wechselspannungsausgang X der Teilumrichtereinheit 14 einer jeden n-ten weiteren Sekundärwicklung 16 mit dem zweiten Wechselspannungsausgang Y der Teilumrichtereinheit 7 der Sekundärwicklung 6 verbunden. Weiterhin sind dann die zweiten Wechselspannungsausgänge Y der Teilumrichtereinheiten 14 der n-ten weiteren Sekundärwicklungen 16 miteinander verbunden.

Im Fall n > 1 ist für jede Wechselspannungsausgangsphase u, v, w der Umrichterschaltung der erste Wechselspannungsausgang X der Teilumrichtereinheit 14 einer jeden ersten weiteren Sekundärwicklung 16 mit dem zweiten Wechselspannungsausgang Y der Teilumrichtereinheit 7 der Sekundärwicklung 6 verbunden und jede Teilumrichtereinheit 14 der n weiteren Sekundärwicklungen 16 ist an den Wechselspannungsausgängen X, Y seriell mit der jeweils benachbarten Teilumrichtereinheit 14 der n weiteren Sekundärwicklungen 16 verbunden. Darüber hinaus sind dann auch die zweiten Wechselspannungsausgänge Y der Teilumrichtereinheiten 14 der n-ten weiteren Sekundärwicklungen 16 miteinander verbunden.

Allgemein erlauben die n weiteren Sekundärwicklungen 16 mit den zugeordneten Teilumrichtereinheiten 14 mit Vorteil eine höhere Spannung an den jeweiligen jede Wechselspannungsausgangsphase u, v, w. Ferner lassen sich die Schaltverluste weiter reduzieren. Darüber hinaus lassen sich mit Hilfe der n weiteren Sekundärwicklungen 16 mit den zugeordneten Teilumrichtereinheiten 14 auch Harmonische Oberschwingungen bzgl. der Spannung des Wechselspannungsnetzes, hervorgerufen durch das Schalten der Leistungshalbleiterschalter der Teilumrichtereinheiten 7, 12 sowie des Gleichrichters 1 und des Wechselrichters 3, reduzieren. Eine weitere Reduzierung dieser Harmonische Oberschwingungen kann durch versetztes Ansteuern der Leistungshalbleiterschalter der Teilumrichtereinheiten 7, 12 bzw. versetztes Takten der Leistungshalbleiterschalter der Teilumrichtereinheiten 7, 12 erreicht werden. Eine zusätzliche Reduzierung dieser Harmonische Oberschwingungen kann durch Phasenverschiebung der Sekundärwicklungen 6, 16 zueinander erreicht werden.

### Bezugszeichenliste

- 1: Gleichrichter
- 2: Energiespeicherkreis
- 3: Wechselrichter
- 4: Transformator
- 5: Primärwicklung
- 6: Sekundärwicklung
- 7: Teilumrichtereinheit
- 8: LC-Resonanzschaltung
- 9: Gleichrichter der Teilumrichtereinheit
- 10: Energiespeicherkreis der Teilumrichtereinheit
- 11: Wechselrichter der Teilumrichtereinheit
- 12: CLL-Resonanzschaltung
- 13: Leistungsfaktorregelungseinheit
- 14: Teilumrichtereinheit bzgl. weiterer Sekundärwicklung
- 15: Energiespeicherkreis der Teilumrichtereinheit bzgl. weiterer Sekundärwicklung
- 16: weitere Sekundärwicklung
- 17: Wechselrichter der Teilumrichtereinheit bzgl. weiterer Sekundärwicklung
- 18: Gleichrichter der Teilumrichtereinheit bzgl. weiterer Sekundärwicklung

## Patentansprüche

1. Umrichterschaltung mit einem mit einem Wechselspannungsnetz verbindbaren Gleichrichter (1), welcher Gleichrichter (1) gleichspannungsseitig mit einem Energiespeicherkreis (2) verbunden ist,
mit einem Wechselrichter (3), welcher Wechselrichter (3) gleichspannungsseitig mit dem Energiespeicherkreis (2) verbunden ist, **dadurch gekennzeichnet,**
**dass** ein Transformator (4) mit seiner Primärwicklung (5) mit einem ersten und zweiten Wechselspannungsausgang (A, B) des Wechselrichters (3) verbunden ist,
**dass** der Transformator (4) für jede Wechselspannungsausgangsphase (u, v, w) der Umrichterschaltung eine Sekundärwicklung (6) aufweist und mit jeder Sekundärwicklung (6) eine der jeweiligen Sekundärwicklung (6) zugeordnete Teilumrichtereinheit (7) verbunden ist, wobei ein erster Wechselspannungsausgang (X) einer jeden Teilumrichtereinheit (7) die jeweilige Wechselspannungsausgangsphase (u, v, w) der Umrichterschaltung bildet und
**dass** in die Verbindung der Primärwicklung (5) mit den Wechselspannungsausgängen (A, B) des Wechselrichters (3) eine LC-Resonanzschaltung (8) seriell eingeschaltet ist, wobei die LC-Resonanzschaltung (8) eine Resonanzkapazität (C) und Resonanzinduktivität (L) aufweist.

2. Umrichterschaltung mit einem mit einem Wechselspannungsnetz verbindbaren Gleichrichter (1), welcher Gleichrichter (1) gleichspannungsseitig mit einem Energiespeicherkreis (2) verbunden ist,
mit einem Wechselrichter (3), welcher Wechselrichter (3) gleichspannungsseitig mit dem Energiespeicherkreis (2) verbunden ist, **dadurch gekennzeichnet,**
**dass** ein Transformator (4) mit seiner Primärwicklung (5) mit einem ersten und zweiten Wechselspannungsausgang (A, B) des Wechselrichters (3) verbunden ist,
**dass** der Transformator (4) für jede Wechselspannungsausgangsphase (u, v, w) der Umrichterschaltung eine Sekundärwicklung (6) aufweist und mit jeder Sekundärwicklung (6) eine der jeweiligen Sekundärwicklung (6) zugeordnete Teilumrichtereinheit (7) verbunden ist, wobei ein erster Wechselspannungsausgang (X) einer jeden Teilumrichtereinheit (7) die jeweilige Wechselspannungsausgangsphase (u, v, w) der Umrichterschaltung bildet und
**dass** in die Verbindung der Primärwicklung (5) mit den Wechselspannungsausgängen (A, B) des Wechselrichters (3) eine CLL-Resonanzschaltung (12) eingeschaltet ist, welche CLL-Resonanzschaltung (12) eine Resonanzkapazität (C), eine erste und eine zweite Resonanzinduktivität (L1, L2) aufweist.

3. Umrichterschaltung nach Anspruch 2, **dadurch gekennzeichnet, dass** die Resonanzkapazität (C) seriell mit der ersten Resonanzinduktivität (L1) verbunden ist und die Serienschaltung der Resonanzkapazität (C) mit der ersten Resonanzinduktivität (L1) in die Verbindung der Primärwicklung (5) mit dem ersten Wechselspannungsausgang (A) des Wechselrichters (3) eingeschaltet ist und die zweite Resonanzinduktivität (L2) mit dem Verbindungspunkt der Resonanzkapazität (C) mit der ersten Resonanzinduktivität (L1) verbunden ist, wobei die zweite Resonanzinduktivität (L2) mit der Verbindung der Primärwicklung (5) mit dem zweiten Wechselspannungsausgang (B) des Wechselrichters (3) verbunden ist.

4. Umrichterschaltung nach einem der Ansprüche 1 bis 3, **dadurch gekennzeichnet, dass** eine Leistungsfaktorregelungseinheit (13) zwischen dem Gleichrichter (1) und dem Energiespeicherkreis (2) eingeschaltet ist.

5. Umrichterschaltung nach einem der Ansprüche 1 bis 4, **dadurch gekennzeichnet, dass** jede Teilumrichtereinheit (7) einen Gleichrichter (9) aufweist, welcher Gleichrichter (9) gleichspannungsseitig mit einem Energiespeicherkreis (10) der Teilumrichtereinheit (7) verbunden ist, und
dass jede Teilumrichtereinheit (7) einen Wechselrichter (11) aufweist, welcher Wechselrichter (11) gleichspannungsseitig mit dem Energiespeicherkreis (10) der Teilumrichtereinheit (7) verbunden ist und die Wechselspannungsausgänge des Wechselrichters (11) den ersten und einen zweiten Wechselspannungsausgang (X, Y) der zugehörigen Teilumrichtereinheit (7) bilden.

6. Umrichterschaltung nach einem der Ansprüche 5, **dadurch gekennzeichnet, dass** die zweiten Wechselspannungsausgänge (Y) der Teilumrichtereinheiten miteinander verbunden sind.

7. Umrichterschaltung nach einem der Ansprüche 1 bis 5, **dadurch gekennzeichnet, dass** der Transformator (4) für jede Wechselspannungsausgangsphase (u, v, w) der Umrichterschaltung n-weitere Sekundärwicklungen (16) aufweist und mit jeder der n weiteren Sekundärwicklung (16) eine der jeweiligen n weiteren Sekundärwicklung (16) zugeordnete Teilumrichtereinheit (14) verbunden ist, wobei n ≥ 1 ist.

8. Umrichterschaltung nach Anspruch 7, **dadurch gekennzeichnet, dass** jede Teilumrichtereinheit (14) einer jeden n weiteren Sekundärwicklung (16) einen Gleichrichter (18) aufweist, welcher Gleichrichter (18) gleichspannungsseitig mit einem Energiespeicherkreis (15) der Teilumrichtereinheit (16) verbunden ist, und
dass jede Teilumrichtereinheit (14) der n weiteren Sekundärwicklung (16) einen Wechselrichter (17) aufweist, welcher Wechselrichter (17) gleichspannungsseitig mit dem Energiespeicherkreis (15) der Teilumrichtereinheit (14) verbunden ist und die Wechselspannungsausgänge des Wechselrichters (17) einen ersten und zweiten Wechselspannungsausgang (X, Y) der zugehörigen Teilumrichtereinheit (14) bilden.

9. Umrichterschaltung nach Anspruch 8, **dadurch gekennzeichnet, dass** im Falle n = 1 für jede Wechselspannungsausgangsphase (u, v, w) der Umrichterschaltung der erste Wechselspannungsausgang (X) der Teilumrichtereinheit (14) einer jeden n-ten weiteren Sekundärwicklung (16) mit dem zweiten Wechselspannungsausgang (Y) der Teilumrichtereinheit (7) der Sekundärwicklung (6) verbunden ist, und
dass die zweiten Wechselspannungsausgänge (Y) der Teilumrichtereinheiten (14) der n-ten weiteren Sekundärwicklungen (16) miteinander verbunden sind.

10. Umrichterschaltung nach Anspruch 8, **dadurch gekennzeichnet, dass** im Falle n > 1 für jede Wechselspannungsausgangsphase (u, v, w) der Umrichterschaltung der erste Wechselspannungsausgang (X) der Teilumrichtereinheit (14) einer jeden ersten weiteren Sekundärwicklung (16) mit dem zweiten Wechselspannungsausgang (Y) der Teilumrichtereinheit (7) der Sekundärwicklung (6) verbunden ist und jede Teilumrichtereinheit (14) der n weiteren Sekundärwicklungen (16) an den Wechselspannungsausgängen (X, Y) seriell mit der jeweils benachbarten Teilumrichtereinheit (14) der n weiteren Sekundärwicklungen (16) verbunden ist, und
dass die zweiten Wechselspannungsausgänge (Y) der Teilumrichtereinheiten (14) der n-ten weiteren Sekundärwicklungen (16) miteinander verbunden sind.
